# EUROPÄISCHE PATENTSCHRIFT

(11) **EP 2 309 797 B1**
(45) Veröffentlichungstag und Bekanntmachung des Hinweises auf die Patenterteilung: **15.01.2014**
(21) Anmeldenummer: 10181398.8
(22) Anmeldetag: 25.10.2000
(51) Int. Cl.: H04W 36/12

(54) **Verfahren zum betreiben eines Mobilfunknetzes**
Method for operating a mobile radio network
Procédé pour faire fonctionner un réseau de téléphonie mobile

(30) Priorität: 22.11.1999 DE 19956062; 05.04.2000 DE 10017062
(43) Veröffentlichungstag der Anmeldung: 13.04.2011
(62) Teilanmeldung aus: 00987022.1
(73) Patentinhaber: IPCom GmbH & Co. KG, 82049 Pullach (DE)
(72) Erfinder: Hans, Martin, 31162, Bad Salzdetfurth (DE); Beckmann, Mark, 38124, Braunschweig (DE)
(74) Vertreter: Gigerich, Jan

(56) Entgegenhaltungen:
- WO-A-01/20938
- WO-A-99/22557
- WO-A-99/41850

## Beschreibung

### Stand der Technik

Die Erfindung geht von einem Verfahren zum Betreiben eines Mobilfunknetzes nach der Gattung des Hauptanspruchs aus.

Aus der DE 1 99 44 334 ist bereits ein Verfahren zum Betreiben eines Mobilfunknetzes bekannt, in dem Nutzdaten zwischen einer Mobilstation und einer ersten Basisstation übertragen werden, wobei die Nutzdaten vor ihrer Übertragung zu Dateneinheiten, insbesondere Paketdateneinheiten, zusammengesetzt werden.

WO 99/41850 zeigt eine Methode zum Ändern von Verbindungsparametern, die Endgeräte, Basisstationen und Netzwerkkontroller umfasst. Das Endgerät hat eine Makrodiversity-Verbindung zu Basisstationen und Netzwerkkontrollern, wobei mindestens eine Verbindung zu einem Serving-Netzwerkkontroller sowie mindestens eine Verbindung zu einem Drift-Netzwerkkontroller besteht. Die Netzwerkkontroller umfassen jeweils eine Ladungskontrolle für die Ressourcen der Luftschnittstelle sowie jeweils eine Verbindungskontrolle, die die Verbindungsparameter steuert. Der Serving-Netzwerkkontroller verwaltet seine Verbindungskontrolle selbst, während die Verbindungskontrolle des Drift-Netzwerkkontrollers vom Serving-Netzwerkkontroller gesteuert wird unter Berücksichtigung der Parameter der Ladungskontrolle des Drift-Netzwerkkontrollers.

### Vorteile der Erfindung

Die Erfindung beansprucht in ihrem Oberbegriff ein Verfahren zum Betreiben eines Mobilfunknetzes, in dem Nutzdaten zwischen einer Mobilstation und einer ersten Basisstation übertragen werden, wobei die Nutzdaten vor ihrer Übertragung zu Dateneinheiten, insbesondere Paketdateneinheiten, zusammengesetzt werden und wobei für die Übertragung der Dateneinheiten sowohl in der Mobilstation als auch in einer der ersten Basisstation übergeordneten ersten Netzwerkeinheit übertragungsspezifische Informationen, die einen aktuellen Zustand der Übertragung beschreiben, abgelegt werden. Sie ist gekennzeichnet dadurch, dass bei einem Verbindungswechsel der Mobilstation von der ersten Basisstation zu einer zweiten Basisstation mit einer zweiten übergeordneten Netzwerkeinheit eine Signalisierungsinformation festlegt, ob ein in der Mobilstation abgelegtes Übertragungsprotokoll zurückgesetzt wird, um die Übertragung von ihrem Urzustand aus fortzusetzen, oder ob die vorhandenen und bereits aufgebauten übertragungsspezifischen Informationen von der ersten übergeordneten Netzwerkeinheit an die zweite übergeordnete Netzwerkeinheit übertragen werden, um die Übertragung nach dem Verbindungswechsel im wesentlichen direkt von ihrem aktuellen Zustand aus fortzusetzen.

Sie hat den Vorteil einer Auswahlmöglichkeit, je nach Bedarf eine Übertragung der übertragungsspezifischen Information von der ersten übergeordneten Netzwerkeinheit an die zweite übergeordnete Netzwerkeinheit für eine einzurichtende Telekommunikationsverbindung bei einem Verbindungswechsel vorzusehen. Bei Übertragung der übertragungsspezifischen Informationen an die zweite übergeordnete Netzwerkeinheit ist eine kontinuierliche Übertragung der Dateneinheiten unabhängig vom Verbindungswechsel möglich. Ein Zurücksetzen der übertragungsspezifischen Informationen auf einen Ausgangszustand ist in diesem Fall beim Verbindungswechsel nicht erforderlich. Die Funkübertragung zwischen der Mobilstation und der zweiten Basisstation nach dem Verbindungswechsel wird in diesem Fall somit nicht durch die Übertragung von Daten in ihrer Übertragungskapazität beeinträchtigt, die für eine Wiederherstellung der zuletzt gültigen übertragungsspezifischen Informationen in der zweiten übergeordneten Netzwerkeinheit erforderlich sind. Im Falle der Rücksetzung der Übertragung wird die übertragungsspezifische Information auf einen Ausgangszustand zurückgesetzt. Das erfindungsgemäße Verfahren ist somit flexibel einsetzbar.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, dass den Dateneinheiten vor ihrer Übertragung jeweils Kontrollinformationen hinzugefügt werden, dass die Kontrollinformationen mittels einer Differenzcodierung vor ihrer Übertragung komprimiert werden, wobei für die Kodierung und Dekodierung der Kontrollinformationen in der Mobilstation und in der ersten übergeordneten Netzwerkeinheit jeweils ein Codebuch angelegt wird, wobei die beiden angelegten Codebücher einen identischen Inhalt aufweisen, und dass mit den übertragungsspezifischen Informationen beim Verbindungswechsel das in der ersten übergeordneten Netzwerkeinheit abgelegte Codebuch an die zweite übergeordnete Netzwerkeinheit übertragen wird. Auf diese Weise kann die zweite übergeordnete Netzwerkeinheit das während der Übertragung der Dateneinheiten zwischen der Mobilstation und der ersten Basisstation in der Mobilstation und der ersten übergeordneten Netzwerkeinheit angelegte Codebuch beim Verbindungswechsel direkt von der ersten übergeordneten Netzwerkeinheit übernehmen, so daß das Codebuch nach dem Verbindungswechsel nicht erneut unter Beanspruchung der Übertragungskapazität für die Übertragung zwischen der Mobilstation und der zweiten Basisstation angelegt beziehungsweise aufgebaut werden muß.

Ein weiterer Vorteil besteht darin, daß vor oder bei einem Verbindungsaufbau für die Übertragung der Dateneinheiten zwischen der Mobilstation und der ersten Basisstation eine erste Signalisierungsinformation von der Mobilstation zur ersten übergeordneten Netzwerkeinheit übertragen wird, um der ersten übergeordneten Netzwerkeinheit mitzuteilen, ob bei einem Verbindungswechsel zu einer Basisstation mit einer von der ersten übergeordneten Netzwerkeinheit verschiedenen neuen übergeordneten Netzwerkeinheit die übertragungsspezifischen Informationen an die neue übergeordnete Netzwerkeinheit übertragen werden sollen. Eine weitere Möglichkeit ist, diese erste Signalisierungsinformation von der ersten übergeordeneten Netzwerkeinheit an die Mobilstation zu übertragen, so daß das Netzwerk entscheiden kann, ob die übertragungsspezifischen Informationen von der ersten übergeordneten Netzwerkeinheit an die neue übergeordnete Netzwerkeinheit übertragen werden sollen. Dies ist besonders vorteilhaft, da die erste übergeordnete Netzwerkeinheit Kenntnisse über die Fähigkeiten und Ressourcen der neuen übergeordneten Netzwerkeinheit und über die Festnetzverbindung hat, über die die übertragungsspezifischen Informationen übertragen werden müssen. In jedem Fall wird auf diese Weise eine Auswahlmöglichkeit gegeben, je nach Bedarf eine Übertragung der übertragungsspezifischen Informationen von der ersten übergeordneten Netzwerkeinheit zur neuen übergeordneten Netzwerkeinheit für eine einzurichtende Telekommunikationsverbindung bei einem Verbindungswechsel vorzusehen. Außerdem wird auf diese Weise für die einzurichtende Verbindung die Möglichkeit gegeben, nach dem Verbindungswechsel die übertragungsspezifischen Informationen auf einen Ausgangszustand zurückzusetzen. Das erfindungsgemäße Verfahren ist somit flexibel einsetzbar.

Ein weiterer Vorteil besteht darin, daß vor oder bei dem Verbindungswechsel eine zweite Signalisierungsinformation von der Mobilstation zur ersten übergeordneten Netzwerkeinheit oder von der ersten übergeordneten Netzwerkeinheit an die Mobilstation übertragen wird, um der ersten übergeordneten Netzwerkeinheit bzw. der Mobilstation mitzuteilen, ob bei diesem Verbindungswechsel die übertragungsspezifischen Informationen an die zweite übergeordnete Netzwerkeinheit übertragen werden sollen. Auf diese Weise kann auch während einer Verbindung je nach Bedarf eine Übertragung der übertragungsspezifischen Informationen von der ersten übergeordneten Netzwerkeinheit zur zweiten übergeordneten Netzwerkeinheit für eine einzurichtende Telekommunikationsverbindung oder ein Zurücksetzen der übertragungsspezifischen Informationen auf einen Ausgangszustand bei einem Verbindungswechsel vorgesehen werden, so daß das erfindungsgemäße Verfahren besonders flexibel einsetzbar ist.

Ein weiterer Vorteil besteht darin, daß mit den übertragungsspezifischen Informationen beim Verbindungswechsel in der ersten übergeordneten Netzwerkeinheit zu Kontrollzwecken zwischengespeicherte Dateneinheiten an die zweite übergeordnete Netzwerkeinheit übertragen werden. Auf diese Weise gehen für die Kontrolle der Übertragung der Dateneinheiten, insbesondere auf fehlerfreie Übertragung, benötigte und gegebenenfalls wiederholt zu übertragende zwischengespeicherte Dateneinheiten beim Verbindungswechsel nicht verloren.

Vorteilhaft ist auch, daß die übertragungsspezifischen Informationen beim Verbindungswechsel über ein Festnetz zwischen der ersten übergeordneten Netzwerkeinheit und der zweiten übergeordneten Netzwerkeinheit übertragen werden. Auf diese Weise kann zur Übertragung der übertragungsspezifischen Informationen die in der Regel höhere Datenrate des Festnetzes genutzt werden, ohne die Übertragungskapazität des Mobilfunknetzes für diese Übertragung zu beanspruchen.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines Mobilfunknetzes, Figur 2 ein Blockschaltbild für eine Verbindung zwischen einer Mobilstation und einer ersten übergeordneten Netzwerkeinheit über eine erste Basisstation vor einem Verbindungswechsel, Figur 3 ein Blockschaltbild für eine Verbindung zwischen der Mobilstation und einer zweiten übergeordneten Netzwerkeinheit über eine zweite Basisstation nach einem Verbindungswechsel, Figur 4a) eine Kompressionstabelle und Figur 4b) einen Zwischenspeicher für Dateneinheiten.

### Beschreibung des Ausführungsbeispiels

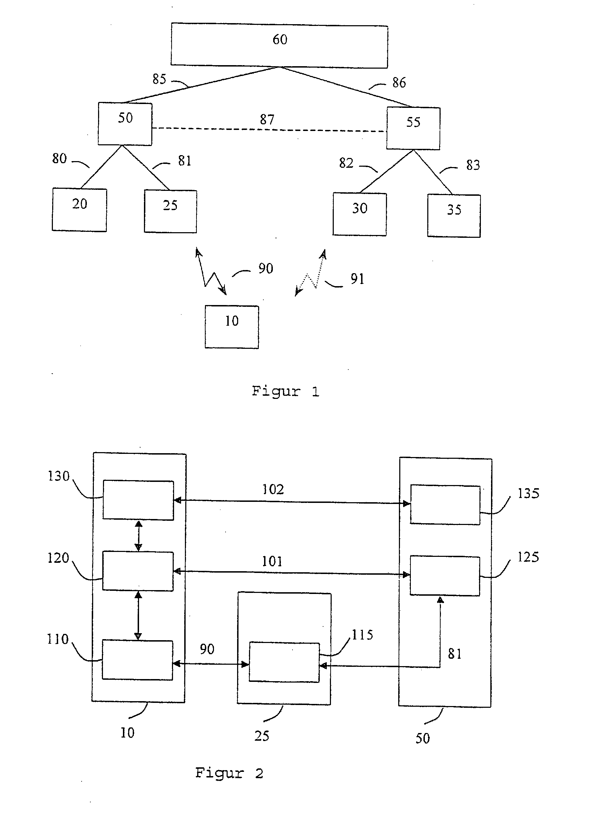

Die Erfindung behandelt ein Verfahren zum Betreiben eines Mobilfunknetzes 1 gemäß Figur 1, bei dem während einer aufgebauten Verbindung ein Verbindungswechsel zwischen zwei Basisstationen 25, 30 erfolgt, der auch als "relocation" bezeichnet wird. Das Mobilfunknetz 1 kann dabei beispielsweise nach dem GSM-Standard (Global System for Mobile Communications) oder nach dem UMTS-Standard (Universal Mobile Telecommunications System) aufgebaut sein. Das Verfahren bezieht sich dabei speziell auf das Versenden von übertragungsspezifischen Informationen der aufgebauten Verbindung, beispielsweise in Form von internen Protokollinformationen einer Konvergenzprotokollschicht 130, 135, zwischen zwei übergeordneten Netzwerkeinheiten 50, 55 des zellular ausgebildeten Mobilfunknetzes 1.

Das zellulare Mobilfunknetz 1 besteht aus verschiedenen Einheiten 10, 20, 25, 30, 35, 50, 55, 60, die physikalisch miteinander verbunden sind. Dabei kennzeichnet 10 eine Mobilstation des Mobilfunknetzes 1, die beispielsweise als mobiles Telekommunikationsendgerät ausgebildet sein kann. Das mobile Telekommunikationsendgerät 10 ist über eine erste Luftschnittstelle 90 mit einer ersten Basisstation 25 des Mobilfunknetzes 1 verbunden. Die erste Basisstation 25 ist über eine erste Festnetzverbindung 81 mit einer ersten übergeordneten Netzwerkeinheit 50 verbunden. Eine zweite Basisstation 30 ist über eine zweite Festnetzverbindung 82 mit einer zweiten übergeordneten Netzwerkeinheit 55 verbunden. Eine dritte Basisstation 20 ist über eine dritte Festnetzverbindung 80 mit der ersten übergeordneten Netzwerkeinheit 50 verbunden. Eine vierte Basisstation 35 ist über eine vierte Festnetzverbindung 83 mit der zweiten übergeordneten Netzwerkeinheit 55 verbunden. Die erste übergeordnete Netzwerkeinheit 50 ist über eine fünfte Festnetzverbindung 85 mit einer höchsten Netzwerkeinheit 60 verbunden. Die zweite übergeordnete Netzwerkeinheit 55 ist über eine sechste Festnetzverbindung 86 mit der höchsten Netzwerkeinheit 60 verbunden. Optional kann die erste übergeordnete Netzwerkeinheit 50 über eine siebte Festnetzverbindung mit der zweiten übergeordneten Netzwerkeinheit 55 verbunden sein, wie in Figur 1 gestrichelt dargestellt ist. Die erste übergeordnete Netzwerkeinheit 50, die zweite übergeordnete Netzwerkeinheit 55 und gegebenenfalls weitere übergeordnete Netzwerkeinheiten bilden gemäß dem UMTS-Standard sogenannte "Radio Network Subsystems" (RNS). Die höchste Netzwerkeinheit bildet gemäß dem UMTS-Standard einen sogenannten "GPRS Support Node" (General Packet Radio System Support Node) (GSN).

Im zellularen Mobilfunknetz 1 werden zur Datenübertragung zwischen dem mobilen Telekommunikationsendgerät 10 und den übrigen an der aufgebauten Verbindung beteiligten Einheiten des Mobilfunknetzes 1 in vorliegender Erfindung nicht beanspruchte logische Verbindungen hergestellt. Dabei existieren verschiedene Arten von logischen Verbindungen zwischen dem mobilen Telekommunikationsendgerät 10 und den verschiedenen beteiligten Einheiten des Mobilfunknetzes 1 gleichzeitig. Diese logischen Verbindungen entstammen einem hierarchischen Modell in dem jede hierarchische Schicht einem Protokoll entspricht, das sowohl im mobilen Telekommunikationsendgerät 10 als auch in der entsprechenden Einheit des Mobilfunknetzes 1 vorhanden ist und das die entsprechende logische Verbindung realisiert.

Gemäß Figur 2 sind beispielhaft die in vorliegender Erfindung nicht beanspruchten logischen Verbindungen zwischen der Mobilstation 10 und der ersten übergeordneten Netzwerkeinheit 50 sowie zwischen der Mobilstation 10 und der ersten Basisstation 25 dargestellt. Die unterste hierarchische Schicht in diesem hierarchischen Modell ist durch eine erste physikalische Schicht 110 im mobilen Telekommunikationsendgerät 10 und eine zweite physikalische Schicht 115 in der ersten Basisstation 25 gebildet, die eine der ersten Luftschnittstelle 90 entsprechenden physikalische Verbindung zwischen dem mobilen Telekommunikationsendgerät 10 und der ersten Basisstation 25 des Mobilfunknetzes 1 realisieren. Darüber liegt eine Datensicherungsschicht, die gemäß dem UMTS-Standard auch als "Data Link Layer" bezeichnet wird, und die in mehrere Unterschichten aufgeteilt ist und verschiedene logische Verbindungen zwischen dem mobilen Telekommunikationsendgerät 10 und der gemäß dem UMTS-Standard als "Radio Network Controler" (RNC) bezeichneten ersten übergeordneten Netzwerkeinheit 50 realisiert. Eine solche Unterschicht ist gemäß dem UMTS-Standard die Funkverbindungsteuerungsschicht, die auch als "Radio Link Control"-Schicht (RLC) bezeichnet wird und in der ein erstes RLC-Protokoll 120 im mobilen Telekommunikationsendgerät 10 und ein zweites RLC-Protokoll 125 in der ersten übergeordneten Netzwerkeinheit 50 eine erste logische RLC-Verbindung 101 als eine der genannten logischen Verbindungen realisieren. Eine andere Unterschicht ist die Paketdaten-Konvergenzprotokollschicht, die gemäß dem UMTS-Standard auch als "Paket Data Convergence Protocol"-Schicht (PDCP) bezeichnet wird und in der ein erstes PDCP-Protokoll 130 im mobilen Telekommunikationsendgerät 10 und ein zweites PDCP-Protokoll 135 in der ersten übergeordneten Netzwerkeinheit 55 eine erste logische PDCP-Verbindung 102 realisieren. In den höheren hierarchischen Schichten, wie beispielsweise der Netzwerk- und Transportschicht, können weitere Protokolle, wie beispielsweise das Funkressourcensteuerungsprotokoll RRC (Radio Resource Control), das Internet-Protokoll IP, das Übertragungssteuerungsprotokoll TCP (Transit Control Protocol) und dergleichen weitere logische Verbindungen aufbauen. Gemäß Figur 2 sind im hierarchischen Modell benachbarte Schichten miteinander verbunden, wobei übergeordnete Schichten die Dienste der entsprechend benachbarten untergeordneten Schichten in Anspruch nehmen. Die zweite physikalische schicht 115 ist wie in Figur 1 angedeutet über die erste Festnetzverbindung mit der ersten übergeordneten Netzwerkeinheit 50 und dort mit dem zweiten RLC-Protokoll 125 verbunden.

Aus der Veröffentlichung "Technical Specification 25.301, UMTS Radio Interface Protocol Architecture" ist die entsprechende UMTS Protokoll Architektur der sogenannten Schichten 2 und 3 bekannt, zu denen auch die Paketdaten-Konvergenzprotokollschicht gehört. Insbesondere ist die Paketdaten-Konvergenzprotokollschicht und ihre Lage innerhalb dieser Architektur bekannt. Das PDCP-Protokoll 130, 135 ist aus der Veröffentlichung "Technical Specification 25.323, Packet Data Convergence Protocol", soweit es bisher spezifiziert ist, bekannt.

Eine Aufgabe des PDCP-Protokolls 130, 135 ist die Komprimierung von Paketdaten-Kontrollinformationen, die von den Protokollen der oberhalb der Paketdaten-Konvergenzprotokollschicht liegenden Transport- und Netzwerkschicht den ebenfalls in der Paketdatenprotokollschicht vor ihrer Übertragung zu Dateneinheiten oder Paketdateneinheiten zusammengestezten Nutzdaten einer ebenfalls oberhalb der Paketdaten-Konvergenzprotokollschicht ablaufenden Anwendung hinzugefügt wurden und die vor der Übertragung über die erste Luftschnittstelle 90 komprimiert werden müssen, um eine effiziente Übertragung zu ermöglichen.

Die Komprimierung ist dabei auf verschiedene Weise möglich. Kompressionsalgorithmen sind beispielsweise spezifiziert in der Veröffentlichung IETF, RFC 1144 oder in der Veröffentlichung IETF, RFC 2507. Die meisten effizienten Kompressionsalgorithmen nutzen dabei die Tatsache, daß sich die Paketdaten-Kontrollinformationen in aufeinanderfolgenden Paketdateneinheiten eines bestimmten Datentyps nicht oder nur zu einem gewissen Teil unterscheiden. Es wird eine Differenzkodierung für die Paketdaten-Kontrollinformationen angewendet, die die Paketdaten-Kontrollinformationen der ersten Paketdateneinheit eines ersten Datentyps oder anderer Referenzpaketdaten unkomprimiert und für alle weiteren Paketdateneinheiten dieses Datentyps jeweils die Differenz zu den vorhergehenden Paketdaten-Kontrollinformationen oder zu den anderen Referenzpaketdaten-Kontrollinformationen überträgt. Die Datentypen der Paketdateneinheiten können dabei beispielsweise durch die genutzen Transport- und NetzwerkSchicht-Protokolle gegeben sein. Beispielsweise kann ein erster Datentyp durch ein TCP/IP-Protokoll und ein zweiter Datentyp durch ein UDP/IP-Protokoll (User Datagram Protocol) vorgegeben sein. Um eine effiziente Kodierung beziehungsweise Kompression der Paketdaten-Kontrollinformationen auch dann zu ermöglichen, wenn ein Paketdatenstrom aus Paketdateneinheiten verschiedener Datentypen besteht, wird wärend der Kodierung eine Tabelle auf der Empfänger- und Senderseite angelegt, in die die Paketdaten-Kontrollinformationen der verschiedenen Datentypen abgelegt werden. Für jede zu komprimierende Paketdateneinheit wird nun zunächst in der Tabelle nachgesehen, ob dort ein ähnlicher oder gleicher Eintrag bereits gespeichert ist. Ist das der Fall, dann wird die Differenzkodierung zwischen den neuen und den in der Tabelle befindlichen Paketdaten-Kontrollinformationen ausgeführt und dem Dekompressor auf der Empfängerseite wird nicht nur die Differenz übertragen sondern auch der Tabelleneintrag signalisiert, zu welchem die Differenzkodierung angewendet wurde. Wird in der Tabelle senderseitig kein passender Eintrag gefunden, so wird die Paketdateneinheit als neuer Datentyp aufgefaßt. Außerdem werden die zugehörigen Paketdaten-Kontrollinformationen als neuer Eintrag in die Tabelle aufgenommen und unkomprimiert übertragen. Auch der Empfänger nimmt dieses Paket in seine Tabelle auf.

Zur effizienten Komprimierung von Paketdaten-Kontrollinformationen von Paketdatenströmen werden während der Komprimierung auf Sender- und Empfängerseite Tabellen, die auch als Kompressionstabellen oder Codebücher bezeichnet werden, erstellt. Diese Codebücher machen die beschriebene Differenzkodierung möglich. Um solchermaßen differenzkodierte Paketdaten-Kontrollinformationen dekodieren zu können, müssen die Tabellen auf Sender- und Empfängerseite immer übereinstimmen.

Das zellulare Mobilfunknetz bietet die Möglichkeit der Datenübertragung vom mobilen Telekommunikationsendgerät 10 zu einer Einheit des Mobilfunknetzes 1 auch dann, wenn der Nutzer des mobilen Telekommunikationsendgerätes 10 die von der ersten Basisstation 25 aufgespannte Funkzelle verläßt. Dazu wird zwischen dem mobilen Telekommunikationsendgerät 10 und dem Mobilfunknetz 1 ein Verfahren zur Übergabe der aufgebauten Verbindung für die Datenübertragung von der ersten Basisstation 25 zur zweiten Basisstation 30 durchgeführt, vorausgesetzt, der Nutzer des mobilen Telekommunikationsendgerätes 10 bewegt sich in die von der zweiten Basisstation 30 aufgespannte Funkzelle. Dieser Verbindungswechsel wird wie beschrieben auch als "relocation" bezeichnet.

Bei einem Verbindungswechsel kann es nun sein, daß die zweite Basisstation 30, zu der die Verbindung übergeben werden soll, mit einer anderen übergeordneten Netzwerkeinheit verbunden ist als die bisherige erste Basisstation 25. Dies ist beim beschriebenen Ausführungsbeispiel der Fall, wonach die zweite Basisstation 30 im Unterschied zur ersten Basisstation 25 mit der zweiten übergeordneten Netzwerkeinheit 55 verbunden ist.

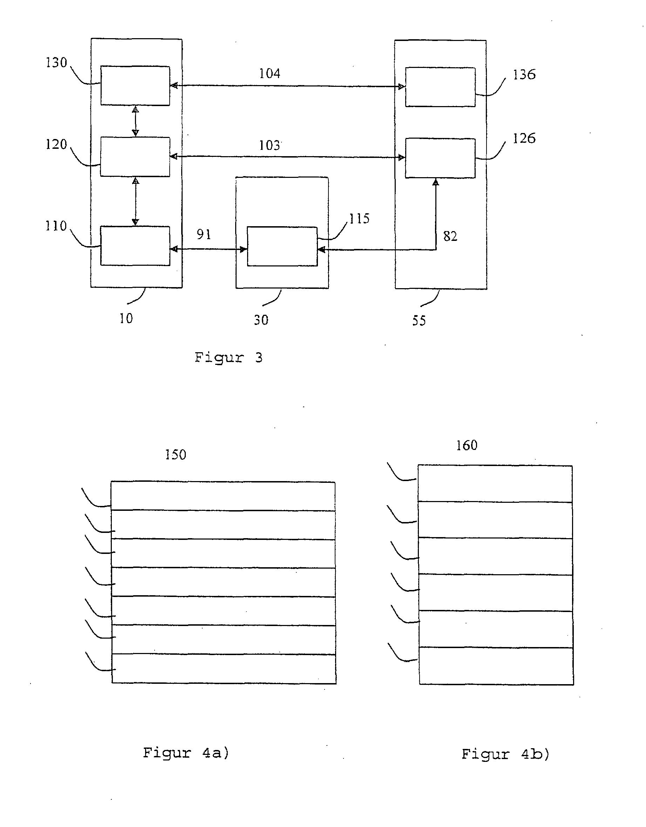

Jedes Protokoll existiert immer mindestens zweimal auf der gleichen Protokollschichtebene in verschiedenen Netzwerkeinheiten, wie auch in Figur 2 das RLC-Protokoll und das PDCP-Protokoll sowohl im mobilen Telekommunikationsendgerät 10 als auch in der ersten übergeordneten Netzwerkeinheit 50 existiert. Speziell die PDCP-Protokolle 130, 135 liegen gemäß dem UMTS-Standard wie beschrieben zum einen im mobilen Telekommunikationsendgerät 10 und zum anderen in der ersten übergeordneten Netzwerkeinheit 50 sowie in weiteren übergeordneten Netzwerkeinheiten, die als RNC ausgebildet sind. Im Falle des beschriebenen Verbindungswechsels wird die bestehende Datenverbindung zwischen dem mobilen Telekommunikationsendgerät 10 und dem Mobilfunknetz 1 so verlegt, daß sie über die zweite Basisstation 30 und die zweite übergeordnete Netzwerkeinheit 55 verläuft. Damit sendet das erste PDCP-Protokoll 130 im mobilen Telekommunikationsendgerät 10 vor dem Verbindungswechsel an das zweite PDCP-Protokoll 135 in der ersten übergeordneten Netzwerkeinheit 55 über die erste logische PDCP-Verbindung 102 und nach dem Verbindungswechsel an ein drittes PDCP-Protokoll 136 der zweiten übergeordneten Netzwerkeinheit 55 gemäß Figur 3.

Das Problem besteht nun darin, daß während der Kodierung der Paketdaten-Kontrollinformationen in der ersten übergeordneten Netzwerkeinheit 50 durch das zweite PDCP-Protokoll 135 ein Codebuch angelegt wurde, das zunächst in der zweiten übergeordneten Netzwerkeinheit 55 nicht zur Verfügung steht und deshalb vom dortigen dritten PDCP-Protokoll 136 nicht genutzt werden kann. Werden nun also Paketdaten-Kontrollinformationen vom ersten PDCP-Protokoll 130 im mobilen Telekommunikationsendgerät 10 unter Benutzung des im mobilen Telekommunikationsendgerät 10 aufgebauten Codebuchs differenzkodiert, so können die entsprechenden Paketdaten-Kontrollinformationen vom dritten PDCP-Protokoll 136 der zweiten übergeordneten Netzwerkeinheit 55 nicht dekodiert beziehungsweise dekomprimiert werden, da dort kein Codebuch existiert bzw. die Einträge in einem dortigen Codebuch nicht mit denen im mobilen Telekommunikationsendgerät 10 übereinstimmen.

Eine Lösung dieses Problems besteht im Zurücksetzen der für die Erzeugung der erforderlichen PDCP-Protokolle vorgesehenen PDCP-Protokolleinheiten in der zweiten übergeordneten Netzwerkeinheit 55 und im mobilen Telekommunikationsendgerät 10. In der zweiten übergeordneten Netzwerkeinheit 55 ist dazu nichts zu tun, da dort die entsprechende PDCP-Protokolleinheit beim Verbindungswechsel neu eingerichtet wird und deshalb automatisch zurückgesetzt ist. Im mobilen Telekommunikationsendgerät 10 muß dagegen die entsprechende PDCP-Protokolleinheit explizit zurückgesetzt werden, wobei alle von ihr verwendeten Codebücher gelöscht werden und das erste PDCP-Protokoll 130 in seinen Urzustand zurückgesetzt wird. Dieses Verfahren hat den Nachteil, daß nach dem Verbindungswechsel zunächst wieder Codebücher in der zweiten übergeordneten Netzwerkeinheit 55 und im mobilen Telekommunikationsendgerät 10 aufgebaut werden müssen und die ersten Paketdaten-Kontrollinformationen eines jeden zu kodierenden Datentyps zunächst wieder unkodiert beziehungsweise unkomprimiert sind und damit ineffizient übertragen werden.

Erfindungsgemäß ist nun die Übertragung von übertragungsspezifischen Informationen, wie beispielsweise der während der aufgebauten Verbindung angelegten Codebücher, beim Verbindungswechsel von der ersten übergeordneten Netzwerkeinheit 50 zur zweiten übergeordneten Netzwerkeinheit 55.

Das hat den Vorteil, daß eine effiziente Übertragung über die eine zweite Luftschnittstelle 91 gemäß Figur 1 auch nach dem Verbindungswechsel möglich ist, ohne zunächst die ersten Paketdaten-Kontrollinformationen eines jeden Datentyps unkodiert und damit unkomprimiert übertragen zu müssen. Die übertragungsspezifischen Informationen werden dabei beim Verbindungswechsel von der ersten übergeordneten Netzwerkeinheit 50 entweder direkt über die siebte Festnetzverbindung 87 oder über die fünfte Festnetzverbindung 85, die höchste Netzwerkeinheit 60 und die sechste Festnetzverbindung 86 zur zweiten übergeordneten Netzwerkeinheit übertragen. Die dadurch bewirkte Mehrbelastung der genannten Festnetzverbindungen 85, 86, 87 beim Verbindungswechsel fallen nicht wesentlich ins Gewicht weil bei kleinen Codebüchern die zu übertragende Datenmenge klein ist und die genannten Festnetzverbindungen 85, 86, 87 eine deutlich höhere Datenrate zulassen als die verwendete zweite Luftschnittstelle 91 zwischen dem mobilen Telekommunikationsendgerät 10 und der zweiten Basisstation 30.

Es kann weiterhin vorgesehen sein, bereits vor oder bei Aufbau der Verbindung seitens des mobilen Telekommunikationsendgerätes 10 der ersten übergeordneten Netzwerkeinheit 50 zu signalisieren, ob im Falle eines Verbindungswechsels die übertragungsspezifischen Informationen von der ersten übergeordneten Netzwerkeinheit 50 zur entsprechend neuen übergeordneten Netzwerkeinheit übertragen werden sollen, oder ob die PDCP-Protokolleinheit im mobilen Telekommunikationsendgerät 10 wie beschrieben zurückgesetzt werden soll. Es kann auch vorgesehen sein, dass seitens der ersten übergeordneten Netzwerkeinheit 50 dem mobilen Telekommunikationsendgerät 10 signalisiert wird, ob im Falle eines Verbindungswechsels die übertragungsspezifischen Informationen von der ersten übergeordneten Netzwerkeinheit 50 an die zweite übergeordnete Netzwerkeinheit 55 gesendet werden sollen. Dabei könnten entsprechende Signalisierunginformationen einer von der ersten übergeordneten Netzwerkeinheit 50 zum mobilen Telekommunikationsendgerät 10 übertragenen Nachricht zur Bereitstellung eines Funkübertragungsträgers für die aufzubauende Verbindung hinzugefügt werden, wobei diese Nachricht gemäß dem UMTS-Standard auch als "Radio Bearer Setup"-Nachricht bezeichnet wird.

Eine andere Möglichkeit besteht darin, eine entsprechende Signalisierung unmittelbar vor oder während des vorzunehmenden Verbindungswechsels vorzunehmen.

Die Erfindung geht nun von dem konkreten und beispielhaften Szenario aus, daß das mobile Telekommunikationsendgerät 10 mit Einheiten des Mobilfunknetzes 1, wie der ersten Basisstation 25, der ersten übergeordneten Netzwerkeinheit 50 und der höchsten Netzwerkeinheit 60 über die nötigen physikalischen und logischen Verbindungen, insbesondere der vom ersten PDCP-Protokoll 130 und vom zweiten PDCP-Protokoll 135 realisierten ersten logischen PDCP-Verbindung 102 zwischen dem mobilen Telekommunikationsendgerät 10 und der ersten übergeordneten Netzwerkeinheit 50, verbunden ist und ein Datentransfer, also ein Austausch von Paketdateneinheiten über diese Verbindungen stattfindet.

Dabei legen das erste PDCP-Protokoll 130 und das zweite PDCP-Protokoll 135 aufgrund ihrer Funtionalität übertragungsspezifische Informationen ab, die zur Komprimierung und Manipulation der Nutzdaten und der Paketdaten-Kontrollinformationen benötigt werden. Um eine korrekte Funtion der genannten beiden PDCP-Protokolle 130, 135 zu ermöglichen, muß ein Teil dieser übertragungsspezifischen Informationen in den beiden PDCP-Protokollen 130, 135 synchronisiert oder sogar gleich sein. Wechselt das mobile Telekommunikationsendgerät 10 nun die Funkzelle im Mobilfunknetz 1, beispielsweise aufgrund einer Bewegung des mobilen Telekommunikationsendgerätes 10 aus dem Sendebereich der ersten Basisstation 25, in eine neue Funkzelle, so wird ein Verbindungswechsel durchgeführt und eine neue physikalische Verbindung zwischen dem mobilen Telekommunikationsendgerät 10 und der zweiten Basisstation 30 aufgebaut, die die neue Funkzelle aufspannt. Die neue physikalische Verbindung entspricht dabei der zweiten Luftschnittstelle 91 gemäß Figur 1 und Figur 3. In Figur 3 ist die Verbindung des mobilen Telekommunikationsendgerätes 10 mit der zweiten übergeordneten Netzwerkeinheit 55 über die zweite Basisstation 30 dargestellt, wobei gleiche Bezugszeichen gleiche Elemente kennzeichnen wie in Figur 2. Dabei ist die zweite Basisstation 30 gemäß Figur 3 über die zweite Festnetzverbindung 82 mit der zweiten übergeordneten Netzwerkeinheit 55 beziehungsweise deren RLC-Protokoll verbunden, das hier als drittes RLC-Protokoll 126 gekennzeichnet ist. Die zweite übergeordnete Netzwerkeinheit 55 ist wie die erste übergeordnete Netzwerkeinheit 50 aufgebaut und weist in entsprechender Weise neben dem dritten RLC-Protokoll 126 das dritte PDCP-Protokoll 136 auf. Die zweite Basisstation 30 ist im Mobilfunknetz 1 wie beschrieben mit der von der ersten übergeordneten Netzwerkeinheit 50 verschiedenen zweiten übergeordneten Netzwerkeinheit 55 verbunden. Somit werden auch die logischen Verbindungen zwischen dem mobilen Telekommunikationsendgerät 10 und der zweiten übergeordneten Netzwerkeinheit 55 neu aufgebaut. Dabei wird zwischen dem ersten RLC-Protokoll 120 und dem dritten RLC-Protokoll 126 eine zweite logische RLC-Verbindung 103 aufgebaut. Zwischen dem ersten PDCP-Protokoll 130 und dem dritten PDCP-Protokoll 136 wird eine zweite logische PDCP-Verbindung 104 aufgebaut. Somit wird die erste logische PDCP-Verbindung 103 durch die zweite logische PDCP-Verbindung 104 ersetzt. Dazu muß in der zweiten übergeordneten Netzwerkeinheit 55 das dritte PDCP-Protokoll 136 nach dem Verbindungswechsel erst einmal neu erzeugt werden.

Um nun einen korrekten Datenfluß über die zweite logische PDCP-Verbindung 104 zu ermöglichen, müssen zunächst das erste PDCP-Protokoll 130 im mobilen Telekommunikationsendgerät 10 und das dritte PDCP-Protokoll 136 in der zweiten übergeordneten Netzwerkeinheit 55 wieder synchronisiert werden. Eine Methode hierzu ist das Zurücksetzen des ersten PDCP-Protokolls 130 im mobilen Telekommunikationsendgerät 10 in einen definierten Ausgangszustand, der dem Ausgangszustand des bei dem Verbindungswechsel neu erzeugten dritten PDCP-Protokolls 136 entspricht, wobei das erste PDCP-Protokoll 130 und das dritte PDCP-Protokoll 136 dann die gleichen übertragungsspezifischen Informationen enthalten.

Erfindungsgemäß wird jedoch eine Methode vorgeschlagen, die die übertragungsspezifischen Informationen des zweiten PDCP-Protokolls 135 von der ersten übergeordneten Netzwerkeinheit 50 zu einer dritten PDCP-Protokolleinheit in der zweiten übergeordneten Netzwerkeinheit 55 überträgt, um das dritte PDCP-Protokoll 136 mit den übertragungsspezifischen Informationen des zweiten PDCP-Protokolls 135 zu erzeugen. Ein Zurücksetzen des ersten PDCP-Protokolls 130 ist dann nicht erforderlich. Dadurch lassen sich die Kompressionsmethoden des ersten PDCP-Protokolls 130 und des zweiten PDCP-Protokolls 135 fortlaufend auch zwischen dem ersten PDCP-Protokoll 130 und dem dritten PDCP-Protokoll 136 anwenden, ohne die letztgenannten beiden PDCP-Protokolle 130, 136 zurückzusetzen. Dies führt zu einer erheblichen Datenreduktion auf der zweiten Luftschnittstelle 91 gegenüber einem Zurücksetzen des ersten PDCP-Protokolls 130 und des dritten PDCP-Protokolls 136, da die übertragungsspezifischen Informationen nicht neu angelegt und nach und nach über die zweite Luftschnittstelle 91 übertragen werden müssen, nur um den gleichen oder einen ähnlichen Stand der übertragungsspezifischen Informationen im ersten PDCP-Protokoll 130 und im dritten PDCP-Protokoll 136 zu erreichen, wie er zum Ende der Verbindung des mobilen Telekommunikationsendgerätes 10 mit der zweiten übergeordneten Netzwerkeinheit 55 erreicht worden war.

Beispielhaft werden nun die relevanten Methoden beim Verbindungswechsel von der Funkzelle der ersten Basisstation 25 zur Funkzelle der zweiten Basisstation 30 beschrieben.

Beim Aufbau der Verbindung zwischen dem mobilen Telekommunikationsendgerät 10 und den Einheiten 50, 60 des Mobilfunknetzes 1 über die erste Basisstation 25 werden zwischen diesen Einheiten 50, 60 des Mobilfunknetzes 1 und dem mobilen Telekommunikationsendgerät 10 verschiedene Parameter für die Einrichtung der Verbindung ausgehandelt. Zu diesen Parametern gehören auch der verwendete Kompressionsalgorithmus für die Kompression der Protokoll-Kontrollinformationen, die erlaubte Länge der Codebüchern und die Dienstequalität der Verbindung.

Erfindungsgemäß kann dieser Parameteraushandlung noch ein Parameter hinzugefügt, der festlegt, ob beim Verbindungswechsel von der ersten übergeordneten Netzwerkeinheit 50 zu einer von der ersten übergeordneten Netzwerkeinheit veschiedenen neuen übergeordneten Netzwerkeinheit das in der neuen übergeordneten Netzwerkeinheit erzeugte PDCP-Protokoll zurückgesetzt werden soll oder ob die vorhendenen und bereits aufgebauten übertragungsspezifischen Informationen von der ersten übergeordneten Netzwerkeinheit 50 an die neue übergeordnete Netzwerkeinheit übertragen werden sollen. Die für die Parameteraushandlung entspechend erforderliche Signalisierung kann im einfachsten Fall mit einem Bit geschehen, das einer an die erste übergeordnete Netzwerkeinheit 50 für die Parameteraushandlung zu versendenden Nachricht hinzugefügt wird oder das einer von der ersten übergeordneten Netzwerkeinheit 50 für die Parameteraushandlung zu versendenden Nachricht hinzugefügt wird, und dessen zwei Zustände die Information "PDCP-Protokoll wird zurückgesetzt" bzw. "übertragungsspezifische Informationen werden bei Verbindungswechsel übertragen" signalisieren. In diesem Beispiel sei das Bit auf "übertragungsspezifische Informationen werden bei Verbindungswechsel übertragen" gesetzt.

Von einer Anwendung erzeugte Paketdateneinheiten werden in der ersten übergeordneten Netzwerkeinheit 50 durch ein TCP- und ein IP-Protokoll an die entsprechende in der Schichtenfolge untergeordnete PDCP-Potokolleinheit übergeben, von dieser komprimiert und anschließend an das entsprechende in der Schichtenfolge der PDCP-Protokolleinheit untergeordnete zweite RLC-Protokoll 125 übergeben. Die Paketdateneinheiten werden desweiteren in der PDCP-Protokolleinheit der ersten übergeordneten Netzwerkeinheit 50 solange in einem Zwischenspeicher 160 gemäß Figur 4b) gespeichert, bis die für die Realisierung des zweiten RLC-Protokolls 125 zuständige RLC-Einheit der ersten übergeordneten Netzwerkeinheit 50 die korrekte Übertragung der Paketdateneinheiten zum mobilen Telekommunikationsendgerät 10 quittiert. Es seien bereits vor dem Zeitpunkt, zu dem der Verbindungswechsel stattfindet, (m-1) Paketdateneinheiten von der PDCP-Protokolleinheit der ersten übergeordneten Netzwerkeinheit 50 komprimiert an deren RLC-Einheit übergeben und von dieser quittiert worden. Weitere 6 Paketdateneinheiten m, m+1, ..., m+5 seien schon an diese RLC-Einheit übergeben, jedoch noch nicht quittiert worden und befinden sich deshalb noch im Zwischenspeicher 160. Dort sind die Paketdateneinheiten m, m+1, ..., m+5 mit den Bezugszeichen 161, 162, 163, 164, 165, 166 gekennzeichnet. Bei der Komprimierung der Paketdaten-Kontrollinformationen wurde ein Codebuch 150 als Kompressionstabelle angelegt, das in diesem Beispiel n Einträge gemäß Figur 4a) aufweist, die mit den Bezugszeichen 151, 152, 153, 154, 155, 156, 157 gekennzeichnet sind.

Zum Zeitpunkt, in dem der von der ersten übergeordneten Netzwerkeinheit 50 oder dem mobilen Telekommunikationsendgerät 10 initiierte Verbindungswechsel stattfinden soll, werden nun in der zweiten übergeordneten Netzwerkeinheit 55 als der neuen übergeordneten Netzwerkeinheit nach dem Verbindungswechsel die für die Aufrechterhaltung der Datenübertragung erforderlichen Protokolle wie beispielsweise das dritte RLC-Protokoll 126 und das dritte PDCP-Protokoll 136 erzeugt.

Erfindungsgemäß werden anschließend die in der PDCP-Protokolleinheit der ersten übergeordneten Netzwerkeinheit 50 gespeicherten aktuellen übertragungsspezifischen Informationen, in diesem Beispiel also das Codebuch 150 und der Inhalt des Zwischenspeichers 160 von der ersten übergeordneten Netzwerkeinheit 50 zur zweiten übergeordneten Netzwerkeinheit 55 übertragen. Dazu kann die siebte Festnetzverbindung 87 zwischen den beiden übergeordneten Netzwerkeinheiten 50, 55 verwendet werden, wenn diese existiert, oder die übertragungsspezifischen Informationen können über die fünfte Festnetzverbindung 85, die höchste Netzwerkeinheit 60 und die sechste Festnetzverbindung 86 von der ersten übergeordneten Netzwerkeinheit 50 an die zweite übergeordnete Netzwerkeinheit 55 geleitet werden. Nachdem die übertragungsspezifischen Informationen dem dritten PDCP-Protokoll 136 übergeben wurden, stellt dieses dritte PDCP-Protokoll 136 bezüglich der zweiten logischen PDCP-Verbindung 104 zwischen den PDCP-Protokolleinheiten des mobilen Telekommunikationsendgerätes 10 und der zweiten übergeordneten Netzwerkeinheit 55 ein genaues Abbild des zweiten PDCP-Protokolls 135 der ersten übergeordneten Netzwerkeinheit 50 direkt vor dem Verbindungswechsel dar und die Datenübertragung der Paketdateneinheiten kann im wesentlichen direkt wieder aufgenommen beziehungsweise von ihrem aktuellen Zustand aus fortgesetzt werden, wie er zuletzt vor dem Verbindungswechsel bestanden hatte.

Für die von der ersten übergeordneten Netzwerkeinheit 50 zur zweiten übergeordneten Netzwerkeinheit 55 zu übertragenden übertragungsspezifischen Informationen sind das Codebuch 150 und der Inhalt des Zwischenspeichers 160 nur beispielhaft ausgeführt. In entsprechender Weise können die zu übertragenden übertragungsspezifischen Informationen alternativ oder zusätzlich auch andere Informationen beinhalten, beispielsweise Informationen über eine Kompression der Nutzdaten in den im Rahmen der aufgebauten Verbindung zu übertragenden Paketdateneinheiten, wobei diese Informationen in entsprechender Weise durch Codebücher gebildet sein können.

## Patentansprüche

1. Verfahren zum Betreiben eines Mobilfunknetzes (1), in dem Nutzdaten zwischen einer Mobilstation (10) und einer ersten Basisstation (25) übertragen werden,
dass die Nutzdaten vor ihrer Übertragung zu Dateneinheiten, insbesondere Paketdateneinheiten, zusammengesetzt werden,
dass für die Übertragung der Dateneinheiten sowohl in der Mobilstation (10) als auch in einer der ersten Basisstation (25) übergeordneten ersten Netzwerkeinheit (50) übertragungsspezifische Informationen, die einen aktuellen Zustand der Übertragung beschreiben, abgelegt werden,
**dadurch gekennzeichnet, dass** bei einem Verbindungswechsel der Mobilstation (10) von der ersten Basisstation (25) zu einer zweiten Basisstation (30) mit einer zweiten übergeordneten Netzwerkeinheit (55) eine Signalisierungsinformation festlegt:
ob ein in der Mobilstation (10) abgelegtes Übertragungsprotokoll zurückgesetzt wird, um die Übertragung von ihrem Urzustand aus fortzusetzen,
oder ob die vorhandenen und bereits aufgebauten übertragungsspezifischen Informationen von der ersten übergeordneten Netzwerkeinheit (50) an die zweite übergeordnete Netzwerkeinheit (55) übertragen werden, um die Übertragung nach dem Verbindungswechsel im wesentlichen direkt von ihrem aktuellen Zustand aus fortzusetzen.

2. Verfahren nach Anspruch 1, **dadurch gekennzeichnet, dass** den Dateneinheiten vor ihrer Übertragung jeweils Kontrollinformationen hinzugefügt werden, dass die Kontrollinformationen mittels einer Differenzcodierung vor ihrer Übertragung komprimiert werden, wobei für die Kodierung und Dekodierung der Kontrollinformationen in der Mobilstation (10) und in der ersten übergeordneten Netzwerkeinheit (50) jeweils ein Codebuch (150) angelegt wird, wobei die beiden angelegten Codebücher (150) einen identischen Inhalt aufweisen, und dass mit den übertragungsspezifischen Informationen beim Verbindungswechsel das in der ersten übergeordneten Netzwerkeinheit (50) abgelegte Codebuch (150) an die zweite übergeordnete Netzwerkeinheit (55) übertragen wird.

3. Verfahren nach Anspruch 1 oder 2, **dadurch gekennzeichnet, dass** vor oder bei einem Verbindungsaufbau für die Übertragung der Dateneinheiten zwischen der Mobilstation (10) und der ersten Basisstation (25) eine als erste Signalisierungsinformation von der Mobilstation (10) ausgebildete Signalisierungsinformation zur ersten übergeordneten Netzwerkeinheit (50) übertragen wird, um der ersten übergeordneten Netzwerkeinheit (50) mitzuteilen, ob bei einem Verbindungswechsel zu einer Basisstation mit einer von der ersten übergeordneten Netzwerkeinheit (50) verschiedenen neuen übergeordneten Netzwerkeinheit die übertragungsspezifischen Informationen an die neue übergeordnete Netzwerkeinheit übertragen werden sollen.

4. Verfahren nach Anspruch 1, 2 oder 3, **dadurch gekennzeichnet, dass** vor oder bei dem Verbindungswechsel eine als zweite Signalisierungsinformation von der Mobilstation (10) ausgebildete Signalisierungsinformation zur ersten übergeordneten Netzwerkeinheit (50) übertragen wird, um der ersten übergeordneten Netzwerkeinheit (50) mitzuteilen, ob bei diesem Verbindungswechsel die übertragungsspezifischen Informationen an die zweite übergeordnete Netzwerkeinheit (55) übertragen werden sollen.

5. Verfahren nach einem der vorherigen Ansprüche, **dadurch gekennzeichnet, dass** mit den übertragungsspezifischen Informationen beim Verbindungswechsel in der ersten übergeordneten Netzwerkeinheit (50) zu Kontrollzwecken zwischengespeicherte Dateneinheiten an die zweite übergeordnete Netzwerkeinheit (55) übertragen werden.

6. Verfahren nach einem der vorherigen Ansprüche, **dadurch gekennzeichnet, dass** die übertragungsspezifischen Informationen beim Verbindungswechsel von einer Einheit einer Konvergenzprotokollschicht (125) der ersten übergeordneten Netzwerkeinheit (50) zu einer Einheit einer Konvergenzprotokollschicht der zweiten übergeordneten Netzwerkeinheit (55) übertragen werden.

7. Verfahren nach einem der vorherigen Ansprüche, **dadurch gekennzeichnet, dass** die übertragungsspezifischen Informationen beim Verbindungswechsel über ein Festnetz (85, 86, 87) zwischen der ersten übergeordneten Netzwerkeinheit (50) und der zweiten übergeordneten Netzwerkeinheit (55) übertragen werden.

8. Verfahren nach einem der vorhergehenden Ansprüche, **dadurch gekennzeichnet, dass** vor oder bei einem Verbindungsaufbau für die Übertragung der Dateneinheiten zwischen der Mobilstation (10) und der ersten Basisstation (25) eine als erste Signalisierungsinformation von der ersten übergeordneten Netzwerkeinheit (50) ausgebildete Signalisierungsinformation zur Mobilstation (10) übertragen wird, um der Mobilstation (10) mitzuteilen, ob bei einem Verbindungswechsel zu einer Basisstation mit einer von der ersten übergeordneten Netzwerkeinheit (50) verschiedenen neuen übergeordneten Netzwerkeinheit die übertragungsspezifischen Informationen an die neue übergeordnete Netzwerkeinheit übertragen werden sollen.

9. Verfahren nach einem der vorhergehenden Ansprüche, **dadurch gekennzeichnet, dass** vor oder bei dem Verbindungswechsel eine als zweite Signalisierungsinformation von der ersten übergeordneten Netzwerkeinheit (50) ausgebildete Signalisierungsinformation zur Mobilstation (10) übertragen wird, um der Mobilstation (10) mitzuteilen, ob bei diesem Verbindungswechsel die übertragungsspezifischen Informationen an die zweite übergeordnete Netzwerkeinheit (55) übertragen werden sollen.

## Claims

1. Method for operating a mobile radio network (1) in which user data are transmitted between a mobile station (10) and a first base station (25),
wherein the user data are combined, prior to being transmitted, to form data units, especially packet data units,
wherein the transmission of the data units involves both the mobile station (10) and a first network unit (50), which is superordinate to the first base station (25), being used to store transmission-specific information describing a present state of the transmission,
**characterized in that** in the event of a change of connection by the mobile station (10) from the first base station (25) to a second base station (30) with a second superordinate network unit (55), a piece of signalling information stipulates:
whether a transmission protocol stored in the mobile station (10) is reset in order to continue the transmission from its original state,
or whether the available and already set-up transmission-specific information is transmitted from the first superordinate network unit (50) to the second superordinate network unit (55) in order to continue the transmission essentially directly from its present state following the change of connection.

2. Method according to Claim 1, **characterized in that** prior to being transmitted the data units each have control information added to them, **in that** the control information is compressed by means of difference coding prior to being transmitted, wherein a respective code book (150) is created in the mobile station (10) and in the first superordinate network unit (50) for the purpose of coding and decoding the control information, wherein the two created code books (150) have an identical content, and **in that** in the event of the change of connection the transmission-specific information is accompanied by the transmission of the code book (150) stored in the first superordinate network unit (50) to the second superordinate network unit (55).

3. Method according to Claim 1 or 2, **characterized in that** prior to or during connection set-up for the purpose of transmitting the data units between the mobile station (10) and the first base station (25) a piece of signalling information in the form of first signalling information from the mobile station (10) is transmitted to the first superordinate network unit (50) in order to notify the first superordinate network unit (50) whether a change of connection to a base station with a new superordinate network unit, which is different from the first superordinate network unit (50), needs to prompt transmission of the transmission-specific information to the new superordinate network unit.

4. Method according to Claim 1, 2 or 3, **characterized in that** prior to or during the change of connection a piece of signalling information in the form of second signalling information from the mobile station (10) is transmitted to the first superordinate network unit (50) in order to notify the first superordinate network unit (50) whether this change of connection needs to prompt transmission of the transmission-specific information to the second superordinate network unit (55).

5. Method according to one of the preceding claims, **characterized in that** in the event of the change of connection the transmission-specific information is accompanied by the transmission of data units, buffer-stored in the first superordinate network unit (50) for control purposes, to the second superordinate network unit (55).

6. Method according to one of the preceding claims, **characterized in that** in the event of the change of connection the transmission-specific information is transmitted from a unit on a convergence protocol layer (125) of the first superordinate network unit (50) to a unit on a convergence protocol layer of the second superordinate network unit (55).

7. Method according to one of the preceding claims, **characterized in that** in the event of the change of connection the transmission-specific information is transmitted via a landline network (85, 86, 87) between the first superordinate network unit (50) and the second superordinate network unit (55).

8. Method according to one of the preceding claims, **characterized in that** prior to or during connection set-up for the purpose of transmitting the data units between the mobile station (10) and the first base station (25) a piece of signalling information in the form of first signalling information from the first superordinate network unit (50) is transmitted to the mobile station (10) in order to notify the mobile station (10) whether a change of connection to a base station with a new superordinate network unit, which is different from the first superordinate network unit (50), needs to prompt transmission of the transmission-specific information to the new superordinate network unit.

9. Method according to one of the preceding claims, **characterized in that** prior to or during the change of connection a piece of signalling information in the form of second signalling information from the first superordinate network unit (50) is transmitted to the mobile station (10) in order to notify the mobile station (10) whether this change of connection needs to prompt transmission of the transmission-specific information to the second superordinate network unit (55).

## Revendications

1. Procédé d'exploitation d'un réseau mobile (1), dans lequel des données utilisateur sont transmises entre une station mobile (10) et une première station de base (25),
dans lequel les données utilisateur sont assemblées, avant leur transmission, en des unités de données, surtout des unités de données par paquets,
dans lequel, pour la transmission des unités de données, des informations spécifiques de la transmission qui décrivent un état instantané de la transmission sont stockées dans la station mobile (10) et dans une première unité de réseau (50) de niveau supérieur à la première station de base (25), **caractérisé en ce que**, lorsque la station mobile (10) effectue un transfert de connexion de la première station de base (25) à une seconde station de base (30) au moyen d'une seconde unité de réseau (55) de niveau supérieur, une information de signalisation établit :
si un protocole de transmission stocké dans la station mobile (10) est réajusté afin de poursuivre la transmission à partir de son état d'origine,
ou si les informations spécifiques de la transmission, existantes et déjà établies, sont transmises de la première unité de réseau (50) de niveau supérieur à la seconde unité de réseau (55) de niveau supérieur, afin de poursuivre la transmission après le transfert de connexion de manière sensiblement directe à partir de son état instantané.

2. Procédé selon la revendication 1, **caractérisé en ce que** des informations de commande sont respectivement ajoutées aux unités de données avant leur transmission, **en ce que** les informations de commande sont comprimées par codage différentiel avant leur transmission, **en ce qu'**un livre de code (150) destiné au codage et au décodage des informations de commande est respectivement stocké dans la station mobile (10) et dans la première unité de réseau de niveau supérieur (50), les deux livres de code (150) stockés présentant des contenus identiques, et **en ce que** le livre de code (150) stocké dans la première unité de réseau de niveau supérieur (50) est transmis à la seconde unité de réseau de niveau supérieur (55) avec les informations spécifiques de la transmission lors du transfert de connexion.

3. Procédé selon la revendication 1 ou 2, **caractérisé en ce que**, avant ou pendant l'établissement de la connexion destinée à la transmission des unités de données entre la station mobile (10) et la première station de base (25), une information de signalisation formée comme première information de signalisation par la station mobile (10) est transmise à la première unité de réseau de niveau supérieur (50) afin d'indiquer à la première unité de réseau de niveau supérieur (50) si lors du transfert de connexion vers une station de base par l'intermédiaire d'une nouvelle unité de réseau de niveau supérieur différente de la première unité de réseau de niveau supérieur (50), les informations spécifiques de la transmission doivent être transmises à ladite nouvelle unité de réseau de niveau supérieur.

4. Procédé selon la revendication 1, 2 ou 3, **caractérisé en ce que**, avant ou pendant le transfert de connexion, une information de signalisation formée comme seconde information de signalisation par la station mobile (10) est transmise à la première unité de réseau de niveau supérieur (50) afin d'indiquer à la première unité de réseau de niveau supérieur (50) si lors de ce transfert de connexion, les informations spécifiques de la transmission doivent être transmises à la seconde unité de réseau de niveau supérieur (55).

5. Procédé selon l'une des revendications précédentes, **caractérisé en ce qu'**avec les informations spécifiques de la transmission, lors du transfert de connexion dans la première unité de réseau (50) de niveau supérieur, des unités de données stockées temporairement à des fins de contrôle sont transmises à la seconde unité de réseau (55) de niveau supérieur.

6. Procédé selon l'une des revendications précédentes, **caractérisé en ce que** les informations spécifiques de la transmission sont transmises, lors du transfert de connexion, d'une unité d'une couche de protocole de convergence (125) de la première unité de réseau de niveau supérieur (50) à une unité d'une couche de protocole de convergence de la seconde unité de réseau de niveau supérieur (55).

7. Procédé selon l'une des revendications précédentes, **caractérisé en ce que** les informations spécifiques de la transmission, lors du transfert de connexion, sont transmises par l'intermédiaire d'un réseau fixe (85, 86, 87) entre la première unité de réseau de niveau supérieur (50) et la seconde unité de réseau de niveau supérieur (55).

8. Procédé selon l'une des revendications précédentes, **caractérisé en ce que**, avant ou pendant l'établissement de la connexion destinée à la transmission des unités de données entre la station mobile (10) et la première station de base (25), une information de signalisation formée comme première information de signalisation par la première unité de réseau de niveau supérieur (50) est transmise à la station mobile (10) afin d'indiquer à la station mobile (10) si lors du transfert de connexion vers une station de base par l'intermédiaire d'une nouvelle unité de réseau différente de la première unité de réseau de niveau supérieur (50), les informations spécifiques de la transmission doivent être transmises à la nouvelle unité de réseau de niveau supérieur.

9. Procédé selon l'une des revendications précédentes, **caractérisé en ce que**, avant ou pendant le transfert de connexion, une information de signalisation formée comme seconde information de signalisation par la première unité de réseau de niveau supérieur (50) est transmise à la station mobile (10) afin d'indiquer à la station mobile (10) si lors de ce transfert de connexion, les informations spécifiques de la transmission doivent être transmises à la seconde unité de réseau de niveau supérieur (55).
